# EUROPÄISCHE PATENTANMELDUNG

(11) **EP 1 684 001 A1**
(43) Veröffentlichungstag der Anmeldung: **26.07.2006**
(21) Anmeldenummer: 05100342.4
(22) Anmeldetag: 20.01.2005
(51) Int. Cl.: F21K 7/00, H05B 33/08

(54) **Leuchtmittel**

(71) Anmelder: Niederberger, Christian, 81241 München (DE)
(72) Erfinder: Niederberger, Christian, 81241 München (DE)
(74) Vertreter: Fleuchaus, Michael A.

(57) **Zusammenfassung**

Die vorliegende Erfindung betrifft ein Leuchtmittel (10), welches wenigstens einen Sockel (20) mit Befestigungsmitteln (21) aufweist, durch die eine lösbare form- und/oder kraftschlüssige Verbindung zwischen dem Leuchtmittel und wenigstens einer hierzu korrespondierenden Fassung herstellbar ist. Das Leuchtmittel weist weiterhin Kontaktmittel (30) auf, welche Kontaktelemente der Fassung kontaktieren und wodurch elektrische Energie der ersten Spannung am Leuchtmittel anliegt. Konvertierungsmittel (40) konvertieren die elektrische Energie der ersten Spannung in elektrische Energie der zweiten Spannung, wobei die elektrische Energie der zweiten Spannung in einem lichtemittierenden Element (50) mittels eines Halbleitermaterials zumindest teilweise in Lichtenergie umgewandelt wird. Besonders bevorzugt weist das erfindungsgemäße Leuchtmittel ein zumindest teilweise transparentes Gehäuse (60) auf, welches sich vom Sockel aus erstreckt und bevorzugt der Form eines herkömmlichen Leuchtmittels entspricht. Vorzugsweise ist das Gehäuse aus Kunstharz gebildet, in welchem zumindest die lichtemittierenden Elemente vergossen sind. Durch eine Steuerungseinrichtung (45) besteht die Möglichkeit einer selektiven Ansteuerung einzelner bzw. Gruppen von lichtemittierenden Elementen. Durch die erfindungsgemäße Kombination eines Sockels zur Verwendung in einer Standardfassung mit einer integrierten Konvertierungsund/der Steuerungseinrichtung und wenigstens einem lichtemittierenden Element auf der Basis von Halbleitern wird es möglich, derartige Leuchtmittel ohne zusätzlichen Aufwand in nahezu allen Bereichen einzusetzen, in welchem Leuchtmittel gemäß dem Stand der Technik Verwendung finden.

## Beschreibung

Die vorliegende Erfindung betrifft ein elektrisches Leuchtmittel. Insbesondere betrifft die vorliegende Erfindung elektrisches Leuchtmittel zum Einsatz mit herkömmlichen Leuchtmittel-Fassungen im Nieder- und Netzspannungsbereich, wobei die Erzeugung sichtbaren Lichts mittels eines Halbleiters erfolgt.

Elektische Leuchtmittel gemäß dem Stand der Technik weisen üblicherweise einen Sockel auf, welcher in eine entsprechende Fassung eingeschraubt, eingesteckt oder mit dieser anderweitig, beispielse nach Art eines Bajonett-Verschlusses verbunden wird. Zumeist handelt es sich bei derartigen Leuchtmitteln um Glühbirnen, Neonröhren, Gasentladungslampen oder dergleichen.

Insbesondere kommen elektrische Leuchtmittel beispielsweise in Kraftfahrzeugen, sowohl als Signallampen wie auch zur Beleuchtung ebenso im hahrzeuginnenraum wie außerhalb des Fahrzeugs, z. B. bei Fahrtrichtungsanzeigern, Bremsleuchten und dergleichen zum Einsatz. Ähnliche Anwendungen bestehen beispielsweise auch im Schiffs- und im Flugverkehr, wo im Außenbereich des Schiffes bzw. Flugzeugs Leuchtmittel einerseits zur Beleuchtung und andererseits zur Befeuerung eingesetzt werden und gleichzeitig auch bei der Innenbeleuchtung der Schiffe bzw. Flugzeuge Verwendung finden.

Bei allen genannten elektrischen Leuchtmitteln besteht insbesondere in den genannten Anwendungsfällen zum einen der Nachteil eines verhältnismäßig geringen Wirkungsgrades, d. h. einer geringen Lichtausbeute und andererseits, insbesondere im Falle von Glühlampen, eine Erschütterungsempfindlichkeit wie auch eine verhältnismäßig hohe Empfindlichkeit gegen Überspannungen und dergleichen.

Im Bereich hoher Zuverlässigkeitsanforderungen werden derartige elektrische Leuchtmittel daher häufig ausgewechselt, auch dann, wenn deren Funktion grundsätzlich noch einwandfrei ist. Ein derartiger, vorsorglicher Austausch von Letichtmitteln führt daher zu einem ausgesprochen hohen Kostenaufwand und überdies zu einer erhöhten Umweltbelastung durch die ausgetauschten Leuchtmittel, welche zumeist verworfen werden.

Um dies zu umgehen werden daher mittlerweile häufig auch Beleuchtungsanlagen verwendet, welche auf der Basis von lichtemittierenden Dioden (LED) arbeiten. Beispielsweise werden im Bereich der Kraftfahrzeugtechnik bei Brems- und Fahrtrichtungsanzeigern Beleuchtungsanlagen verwendet, welche über einen großen Bereich eine Vielzahl von lichtemittierenden Dioden aufweisen. Derartige Beleuchtungsanlagen werden jedoch eigens für diesen Zweck entwickelt und gefertigt und sind daher nicht allgemein verwendbar.

Aufgabe der vorliegenden Erfindung ist es daher, ein elektrisches Leuchtmittel zur Verfügung zu stellen, welches die Nachteile des Standes der Technik überwindet und insbesondere den Einsatz von nicht-klassischen Lichtquellen im wesentlichen ohne zusätzlichen Kostenaufwand ermöglicht.

Erfindungsgemäß wird die Aufgabe durch ein Leuchtmittel mit den Merkmalen des Anspruchs 1 gelöst. Weitere bevorzugte Ausführungsformen eines erfindungsgemäßen Leuchtmittels sind Gegenstand der Unteransprüche.

Bei der nachfolgenden Beschreibung der vorliegenden Erfindung wird vermehrt beispielhaft auf den Einsatz erfindungsgemäßer Leuchtmittel für die Navigationsbefeuerung von Flugzeugen Bezug genommen. Es ist jedoch selbstverständlich ebenfalls im Sinne der vorliegenden Erfindung, erfindungsgemäße Leuchtmittel sowohl zum Zweck der Ausleuchtung einzusetzen, als auch in jedwedem anderen Bereich, in dem üblicherweise entsprechende elektrische Leuchtmittel gemäß dem Stand der Technik, also z. B. Glühbirnen, Glühdrahtröhren, Leuchtstoffröhren oder dergleichen verwendet werden. Eine Anwendung erfindungsgemäßer Leuchtmittel kommt gleichermaßen im häuslichen bzw. Haustechnikbereich wie auch im Bereich der Kraftfahrzeugtechnik, der Schifffahrt, an Kraft- und Fahrrädern und dergleichen in Frage.

Demnach weist ein erfindungsgemäßes Leuchtmittel wenigstens einen Sockel auf, welcher Befestigungsmittel umfaßt, durch die eine lösbare, form- und/oder kraftschlüssige Verbindung zwischen dem Leuchtmittel und wenigstens einer hierzu korrespondierenden Fassung herstellbar ist. Das erfindungsgemäße Leuchtmittel weist weiterhin Kontaktmittel auf, welche in dem mit der Fassung form- und/oder kraftschlüssig verbundenen Zustand Kontaktelemente, welche in der Fassung angeordnet sind, kontaktieren, so daß hierdurch elektrische Energie der ersten Spannung U₁ am Leuchtmittel anliegt.

Bei derartigen kontaktmitteln handelt es sich vorzugsweise um sich berührende elektrische Leiter, jedoch sind hierunter auch solche Mittel zu verstehen, bei denen eine Übertragung von elektrischer Energie über einen dielektrischen Zwischenraum beispielsweise durch magnetisch-induktive Kopplung, Microwellenstrahlung oder dergleichen erfolgt.

Weiterhin sind Konvertierungsmittel vorgesehen, welche die elektrische Energie der ersten Spannung U₁ in elektrische Energie der zweiten Spannung U₂ konvertieren, somit also auf einer Eingangsseite (Primärseite) der Konvertierungsmittel elektrischer Energie der ersten Spannung U₁ anliegt und auf einer Ausgangsseite (Sekundärseite) der Konvertierungsmittel elektrische Energie der zweiten Spannung U₂ anliegt.

Erfindungsgemäß weist das Leuchtmittel wenigstens ein lichtemittierendes Element auf, durch welches elektrische Energie der zweiten Spannung U₂ mittels eines Halbleitermaterials zumindest teilweise in Lichtenergie umgewandelt wird.

Im Rahmen der Beschreibung der vorliegenden Erfindung wird mit dem Begriff der ersten oder zweiten Spannung U₁ bzw. U₂ sowohl die Spannungsamplitude als auch die Art der Spannung, also beispielsweise Wechselspannung, Gleichspannung, pulsierende Gleichspannung und dergleichen bezeichnet.

Besonders bevorzugt ist der Sockel des erfindungsgemäßen Leuchtmittels mit einem Schraubgewinde, einer Steckverbindung, einem Bajonettartigen Befestigungselement oder dergleichen versehen, so daß das erfindungsgemäße Leuchtmittel ohne die Durchführung von Veränderungen, Anpassungen oder Umrüstungen an einer herkömmlichen Fassung mit dieser verbunden und verwendet werden kann.

Durch die erfindungsgemäße Kombination eines Sockels zur Verwendung in einer Standardfassung mit einer integrierten Konvertierungseinrichtung und wenigstens einem lichtemittierenden Element auf der Basis von Halbleitern wird es auf überraschende Weise möglich, erfindungsgemäße Leuchtmittel ohne zusätzlichen Aufwand in nahezu allen Bereichen einzusetzen, in welchen Leuchtmittel gemäß dem Stand der Technik Verwendung finden.

Bei einer besonders bevorzugten Ausführungsform der vorliegenden Erfindung weist das elektrische Leuchtmittel ein zumindest bereichsweise transparentes Gehäuse auf, welches sich vom Sockel aus erstreckt und das lichtemittierende Element bzw. mehrere lichtemittierende Elemente im wesentlichen vollständig umgibt. Die Gehäuseform ist dabei vorzugsweise kugelförmig, ellipsoid-, quader- oder polyederförmig oder dergleichen und besonders bevorzugt an die Form des an der entsprechenden Stelle üblicherweise verwendeten Leuchtmittels, beispielsweise eine Glühbirne oder Lcuchtstoffröhre, angeglichen.

Bei einer weiteren bevorzugten Ausführungsform ist das transparente Gehäuse zu einer Längsachse des Sockels im wesentlichen zylindersymetrisch ausgeführt, so daß beispielsweise erfindungsgemäße Leuchtmittel mit einer üblichen 12 V Halogen-Reflektorlampen-Form oder dergleichen ähnliche Formen entstehen.

Die Ausführung der erfindungsgemäßen Leuchtmittel mit entsprechenden Gehäusen ermöglicht es, die Leuchtmittel so zu gestalten, daß sie einerseits von den entsprechenden Leuchtmitteln gemäß dem Stand der Technik äußerlich kaum zu unterscheiden sind und andererseits eine Maßhaltigkeit hinsichtlich Größenstandardisierungen ebenso sehr gewährleistet werden kann, wie die Einhaltung von Ausleuchtungsvorschriften und dergleichen.

Besonders bevorzugt ist die Gehäuseoberfläche bei einer weiteren Ausführungsform der vorliegenden Erfindung zumindest bereichsweise mit einer das abgestrahlte bzw. transmittierte Licht beeinflussenden Oberflächenstruktur und/oder -eigenschaft versehen. Unter derartigen Oberflächenstrukturen sind im Sinne der vorliegenden Erfindung mechanisch erfaßbare Strukturen, wie z. B. Riffelungen, Aufrauhungen, von der allgemeinen Gehäuseform abweichende Ausbauchungen oder Ausnehmungen und dergleichen zu verstehen. Weiterhin sind im Sinne der vorliegenden Erfindung unter Oberflächenstrukturen auch lediglich optisch wirksame Strukturen, wie z. B. Farbfilter, dielektrische Beschichtungen, im Gehäusematerial gespeicherte holographische Strukturen und dergleichen zu verstehen.

Durch die genannten Oberflächenstrukturen besteht die Möglichkeit, das von den lichtemittierenden Elementen abgestrahlte Licht sowohl sprektral zu beeinflußen, also beispielsweise durch Ausfiltern bestimmter Wellenlängen oder Spektralbereiche, als auch die räumliche Abstrahlcharakteristik des erfindungsgemäßen Leuchtmittels vorzugeben. Beispielsweise besteht die Möglichkeit Linsenfunktionen vorzusehen, welche eine fokussierte Licht-Abstrahlung in einer vorgegebenen Vorzugsrichtung ermöglichen. Des weiteren kann durch die geeignete Anordnung von Streubereichen eine homogene Abstrahlcharakteristik über ein Raumwinkelelement (Sektor) oder aber den gesamten Abstrahlbereich des Leuchtmittels erzielt werden.

Bei einer weiteren bevorzugten Ausführungsform der vorliegenden Erfindung weist das Gehäuse vorzugsweise auf der Gehäuseinnenfläche aber gegebenenfalls auch auf der Gehäuseaußenfläche in einem Teilbereich eine reflektierende Beschichtung auf, welche sowohl durch eine Metallbeschichtung als auch durch eine dielektrische Beschichtung gebildet sein kann. Auf diese Weise besteht die Möglichkeit der Fokussierung der durch die lichtemittierenden abgestrahlten Lichtintensität auf spezielle Sektoren bzw. die Möglichkeit, Streulicht, welches anderenfalls in ungenutzte oder unerwünschte Sektoren abgestrahlt würde in eine Vorzugsrichtung zu lenken.

Desweiteren besteht die Möglichkeit, durch eine dielektrische Beschichtung sowohl der inneren als auch der äußeren Oberfläche des erfindungsgemäßen Leuchtmittels eine Grenzflächenreflexion, welche durch einen Sprung des Brechungsindex hervorgerufen wird zu minimieren und hierdurch die Lichtausbeute des erfindungsgemäßen Leuchtmittels zu erhöhen.

Die vorliegende Erfindung umfaßt dabei selbstverständlich alle möglichen Kombinationen der Beeinflußung des abgestrahlten bzw. durch das Gehäuse transmittierten Lichtes sowohl hinsichtlich räumlicher als auch spektraler Eigenschaften.

Bei einer weiteren besonders bevorzugten Ausführungsform der vorliegenden Erfindung ist das Gehäuse zumindest bereichsweise aus einem transparenten Vollmaterial gebildet, so daß die Gehäuseaußenform beispielsweise einer Glühbirne üblicher Bauart entspricht, das Material des Gehäuses sich jedoch bis in den unmittelbar an die lichtemittierenden Elemente angrenzenden Bereich hin erstreckt. Hierdurch wird ein im wesentlichen aus einem Vollmaterial bestehendes Leuchtmittel geschaffen. Besonders bevorzugt ist dabei das Vollmaterial des Gehäuses mit den lichtemittierenden Elementen stoffschlüssig verbunden, wobei insbesondere eine Anpassung bzw. Identiät der Brechungsindizes sowohl des Gehäusevollmaterials als auch eines die lichtemittierenden Elemente gegebenenfalls umgebenden Materials angestrebt wird.

Sofern eine Identität der Brechungsindizes des Gehäusevollmaterials und des Materials der lichtemittierenden Elemente nicht besteht kann durch ein die Stoffschlüssiglceit herstellendes Verbindungsmaterial eine stufenweise Anpassung der Brechungsindizes beider Materialien erfolgen, so daß Reflexionen an den Materialgrenzen verringert werden und hierdurch die Lichtausbeute des erfindungsgemäßen Leuchtmittels weiter erhöht werden kann.

Bevorzugt ist das Vollmaterial im wesentlichen frei von Lufteinschlüßen oder ähnlichen gasförmigen Einschlüßen, welche die Transparenz- bzw. Absorbtionseigenschaften des Vollmaterials durch Streuung oder dergleichen negativ beeinflußen würden.

Bei einer bevorzugten Ausführungsform der vorliegenden Erfindung ist das Gehäuse des erfindungsgemäßen Leuchtmittels aus einem Kunstharz gebildet, in welchem das oder die lichtemittierenden Elemente und/oder die Konvertierungsmittel vergossen sind. Vorzugsweise wird somit der gesamte Körper des erfindungsgemäßen Leuchtmittels im wesentlichen durch ein an die Form eines üblichen Leuchtmittels angepasstes massives Kunstharzgehäuse gebildet, wobei sich das Kunstharz besonders bevorzugt bis in den Innenbereich des Sockels erstreckt.

Durch das Vergießen vorzugsweise aller Komponenten des erfindungsgemäßen Leuchtmittels wird eine besonders hohe mechanische Festigkeit des erfindungsgemäßen Leuchtmittels gegenüber hohen Drücken bzw. Unterdrücken gewährleistet. Aufgrund der hohen mechanischen Festigkeit ist das erfindungsgemäße Leuchtmittel daher beispielsweise besonders geeignet für den Einsatz in der Luft- und Raumfahrt und insbesondere im Außenbereich von Flugzeugen, wo ein zumindest zeitweise erheblich erniedrigter Umgebungsdruck herrscht. Weiterhin ist durch die hohe mechanische Festigkeit des erfindungsgemäßen Leuchtmittels auch ein Einsatz in gehäusefreien Beleuchtungseinrichtungen möglich.

Besonders bevorzugt sind bei dem erfindungsgemäßen Leuchtmittel die Konvertierungsmittel zumindest teilweise innerhalb des Sockels angeordnet. Hierdurch besteht einerseits die Möglichkeit, Verlustwärme, welche im Bereich der Konvertierungsmittel entsteht über die vorzugsweise metallischen Sockelwandungen abzuführen, andererseits ist wiederum gewährleistet, daß das erfindungsgemäße Leuchtmittel gegenüber üblicherweise verwendeten Leuchtmitteln maßhaltig ist, daß also die Abmessungen des erfindungsgemäßen Leuchtmittels denen der üblichen Leuchtmittel entsprechen.

Ein erfindungsgemäßes Konvertierungsmittel enthält dabei besonders bevorzugt wenigstens eine Konstantstrom- und/oder Konstantspannungsquelle, welche den durch das lichtemittierende Element fließenenden Strom oder aber die hieran anliegende Spannung U₂ begrenzt.

Auf diese Weise wird insbesondere auch eine hohe Toleranz des erfindungsgemäßen Leuchtmittels gegenüber unterschiedlichen Versorgungsspannungen U₁ bzw. gegenüber Spannungsspitzen geschaffen, wie sie beispielsweise beim Umschalten von einer Batterie- auf eine Generatorversorgung häufig entstehen. Insbesondere ist es auf diese Weise auch möglich, lichtemittierende Elemente für das erfindungsgemäße Leuchtmittel zu verwenden, deren Betriebspannung in Bereichen liegt, die nicht als Versorgungsspannung U₁ zur Verfügung stehen.

Der Einsatz von Konstantstromquellen gewährleistet insbesondere, daß selbst bei Schwankungen der Versorgungsspannung U₁ keine Variation der Lichtemission und damit der von dem erfindungsgemäßen Leuchtmittel emittierten Lichtintensität erfolgt.

Besonders bevorzugt sind die Konvertierungsmittel durch eine elektronische Schaltung, insbesondere unter Verwendung von SMD-Bausteinen (surface mounted device - Oberflächenmontierte Bauelemente) realisiert.

Bei einer weiteren Ausführungsform des erfindungsgemäßen Leuchtmittels ist zudem wenigstens eine Steuerungseinrichtung vorgesehen, durch welche eine selektive Ansteuerung einzelner lichtemittierender Elemente bzw. von Gruppen lichtemittierender Elemente ermöglicht wird. Diese Maßnahme erlaubt es, insbesondere im Falle einer Vielzahl von lichtemittierenden Elementen sowohl die räumliche als auch spektrale Abstrahlcharakteristik des erfindungsgemäßen Leuchtmittels insofern zu variieren, als dadurch die von einzelnen oder allen Leuchtmitteln abgestrahlte Lichtintensität sowohl zeitlich als auch Sektorenweise beeinflußbar ist.

Auch hierdurch wird die universelle Einsetzbarkeit des erfindungsgemäßen Leuchtmittels dahingehend verbessert, daß je nach Anwendungszweck bei einem ansonsten gleichbleibenden Aufbau des erfindungsgemäßen Leuchtmittels allein durch die Variation der lichtintensität einzelner lichtemittierender Elemente unterschiedliche Leuchtdichten, sowohl Sektorenweise als auch im gesamten Abstrahlungsbereich realisiert werden können und überdies eine zeitliche Modulation der abgestrahlten Lichtintensität möglich ist.

Eine weitere bevorzugte Ausführungsform der vorliegenden Erfindung weist weiterhin Kodierungsmittel auf, welche vorzugsweise am bzw. im Sockel des Leuchtmittels angeordnet sind und durch welche die Funktionsweise der Steuerungseinrichtung hinsichtlich der selektiven Ansteuerung einzelner lichtemittierender Elemente bzw. Gruppen von lichtemittierenden Elementen einstellbar ist. Derartige Kodierungsmittel können beispielsweise in Form von Miniaturschaltelementen mechanischer Art aber auch elektronisch realisiert sein, wobei beispielsweise in einem Speicherelement der Steuerungseinrichtung während der Herstellung oder unmittelbar vor dem Einsatz des erfindungsgemäßen Leuchtmittels die gewünschte Funktionsweise bzw. Funktionsart eingespeichert oder aber durch die mechanischen Schaltelemente eingestellt wird.

Besonders bevorzugt sind die Kodierungsmittel dabei so ausgeführt, daß sie mit Kodierungselementen der Fassung zusammenwirken und hierdurch beim Einschrauben bzw. Einstecken des erfindungsgemäßen Leuclltmittels in die Fassung automatisch eine Kodierung und damit Einstellung der Funktionsweise des erfindungsgemäßen Leuchtmittels erfolgt. Auf diese Weise wird die universelle Einsetzbarkeit des erfindungsgemäßen Leuchtmittels verbessert, da allein die Kodierungselemente der Fassung zur Einstellung der gewünschten Funktionsweise des erfindungsgemäßen Leuchtmittels führen, so daß die korrekte Funktionsweise des erfindungsgemäßen Leuchtmittels jedenfalls gewährleistet ist. Anwendungsbedingte Unterschiede bei der Herstellung in der Bauart des erfindungsgemäßen Leuchtmittels können hierdurch auf ein Minimum reduziert werden.

Bei einer besonders bevorzugten Ausführungsform der vorliegenden Erfindung sind Überwachungsmittel vorgesehen, welche den Betriebszustand wenigstens eines lichtemittierenden Elementes aufzeichnen und für den Fall, daß ein nicht vorgesehener Betriebszustand des lichtemittierenden Elements registriert wird ein Informationssignal ausgeben. Insbesondere wird durch die Überwachungsmittel eine fehlerfreie Funktion wenigstens eines lichtemittierenden Elementes im wesentlichen kontinuierlich überprüft und für den Fall, daß eine Fehlfunktion wengistens eines lichtemittierenden Elementes festgestellt wird, ein Fehlersignal ausgegeben.

Besonders bevorzugt wertet die Steuerungseinrichtung das Fehlersignal aus und verändert aufgrund dessen die Ansteuerung wenigstens eines lichtemittierenden Elementes in der Weise, daß beispielsweise das Vorliegen des Fehlers durch einen visuellen Alarm angezeigt wird oder aber die Fehlfunktion des lichtemittierenden Elementes durch andere lichtemittierende Elemente, welche z. B. als Ersatzelemente vorgesehen sind kompensiert wird. Besonders bevorzugt wird dabei die Lichtintensität wenigstens eines lichtemittierenden Elementes periodisch moduliert, so daß der fehlerhafte Zustand durch ein Blinksignal signalisiert wird.

Bei einer besonders bevorzugten Ausführungsform der vorliegenden Erfindung wird beispielsweise eines einer Vielzahl von lichtemittierenden Elementen, welches als Reserve-Element fungiert, gesondert durch die Steuerungseinrichtung angesteuert, wobei alle anderen lichtemittierenden Elemente durch die Überwachungseinrichtung hinsichtlich einer Fehlfunktion kontinuierlich überwacht werden. Im Falle eines Ausfalls eines oder einer Mehrzahl der überwachten lichtemittierenden Elemente wird durch die Überwachungseinrichtung die Steuerungseinrichtung in einen Alarmzustand geschaltet, wodurch das von der Steuerungseinrichtung isoliert angesteuerte lichtemittierende Reserve-Element periodisch an- und ausgeschaltet wird. Hierdurch wird auf einfache Weise sichergestellt, daß vor Auftreten eines Totalausfalls des erfindungsgemäßen Leuchtmittels der fehlerhafte Zustand signalisiert wird und in Folge dessen das erfindungsgemäße Leuchtmittel ausgetauscht werden kann.

Bei einer weiteren bevorzugten Ausführungsform wird das Fehlersignal von der Überwachungseinrichtung vorzugsweise in Form eines digitalen Signals über die Kontaktmittel des erfindungsgemäßen Leuchtmittels an die das Leuchtmittel aufnehmende Fassung übertragen und von dort aus in den Energieversorgungsstrang eingespeist. Entsprechende, im Energieversorgungsstrang vorgesehene Aufzeichnungsmittel können sodann das Fehlersignal registrieren und den Benutzer - beispielsweise den Fahrer eines KFZ oder den Pilot im Flugzeugcockpit - über den fehlerhaften Zustand des Leuchtmittels informieren.

Bei einer Ausführungsform der vorliegenden Erfindung sind die lichtemittierenden Elemente im wesentlichen in einer Ebene bzw. auf einer Achse oder dergleichen angeordnet. Durch die Anordnung in einer Ebene kann insbesondere für den Fall, daß entsprechende, die Transmissionseigenschaften des Gehäuses beeinflußende Oberflächenstrukturen auf dem Gehäuse angebracht sind, eine sektorenweise anisotrope Lichtabstrahlung durch das erfindungsgemäße Leuchtmittel erfolgen. Für den Fall, daß die Gehäuseoberfläche beispielsweise lediglich aufgeraut ist, erfolgt hingegen eine gleichmäßige Streuung des von den lichtemittierenden Elementen abgestrahlten Lichtes, so daß hierdurch ein homogene Abstrahlung vom Leuchtmittel erfolgt.

Bei einer weiteren Ausführungsform der vorliegenden Erfindung sind mehrere lichtemittierende Elemente im wesentlichen auf einer Kugel- oder Ellipsoidoberfläche und/oder einer Polygonoberfläche oder dergleichen angeordnet. Hierdurch lassen sich beispielsweise Anordnungen realisieren, bei denen das erfindungsgemäße Leuchtmittel in einer Vorzugsrichtung eine besondere Leuchtkraft aufweist, hingegen in hiervon abweichenden Richtungen, beispielsweise querab zur Vorzugsrichtung, definierte, von der Vorzugsrichtung abweichende Abstrahlcharakteristiken zeigt. Insbesondere besteht auch die Möglichkeit, ein erfindungsgemäßes Leuchtmittel zu schaffen, welches unterschiedliche spektrale Abstrahlcharakteristiken in unterschiedlichen Sektoren bzw. Richtungen aufweist, indem die in eine erste Richtung weisenden lichtemittierenden Elemente eine erste spektrale Abstrahlcharakteristik aufweisen und die in eine zweite Richtung weisenden lichtemittierenden Elemente eine zweite spektralen Abstrahlcharakteristik aufweisen. Hierdurch lassen sich beispielsweise die in der Navigation üblichen Sektorenfeuer auf einfache Weise realisieren.

Besonders bevorzugt, handelt es sich bei den lichtemittierenden Elementen des erfindungsgemäßen Leuchtmittels um lichtemittierende Dioden (LED) üblicher Bauart, wobei hier jedoch ebensosehr Leuchtdioden mit verhältnismäßig engen spektralen Emissionseigenschaften zum Einsatz kommen können, wie auch solche lichtemittierende Dioden, die eine Vielzahl von Wellenlängen in unterschiedlichen spektralen Bereichen abstrahlen, wie z. B. Weißlicht-LEDs oder Mehr-Farben-LEDs. Darüber hinaus kommen als lichtemittierende Elemente für das erfindungsgemäße Leuchtmittel auch sogenannte Mikro-Disc-LEDs, organische LEDs (OLEDs), lichtemittierende Polymere (PolyLEDs), Halbleiterlaser und dergleichen in Frage.

Die funktionellen und produktionstechnischen Vor- bzw. Nachteile der vorgenannten lichtemittierenden Elemente sind dem Fachmann hinreichend bekannt und erlauben eine besonders gute Anpassbarkeit des erfindungsgemäßen Leuchtmittels auf den jeweiligen Anwendungszweck, insbesondere im Hinblick auf mechanische, spektrale und/oder energetische Anforderungen.

Weitere Merkmale der vorliegenden Erfindung ergeben sich aus der nachfolgenden detailierten Beschreibung in Verbindung mit den Zeichnungen und den Ansprüchen. Es zeigen:
- Fig. 1: Eine Schnittdarstellung eines ersten Ausführungsbeispiels eines elektrischen Leuchtmittels gemäß der vorliegenden Erfindung;
- Fig. 2: Eine Schnittdarstellung eines zweiten Ausführungsbeispiels eines elektrischen Leuchtmittels gemäß der vorliegenden Erfindung;
- Fig. 3: Eine Schnittdarstellung eines dritten Ausführungsbeispiels eines elektrischen Leuchmittels gemäß der vorliegenden Erfindung;
- Fig. 4: Ein Blockschaltbild einer bevorzugten Ausführungsform eines erfindungsgemäßen Leuchtmittels.

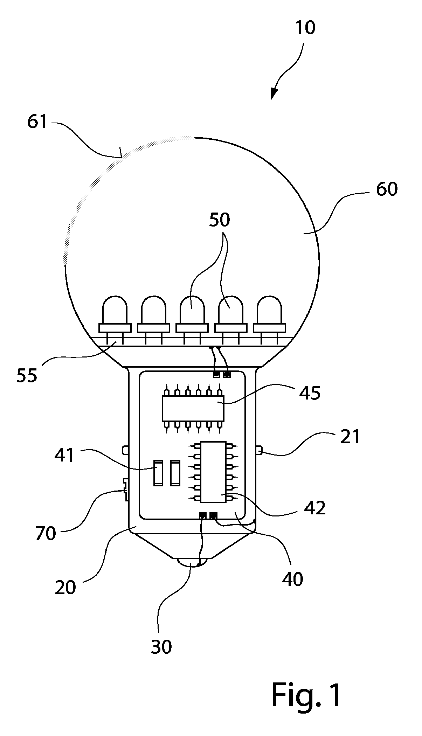

Gemäß Fig. 1 weist ein erfindungsgemäßes Leuchtmittel 10 einen Sockel 20 auf, welcher mit Befestigungsmitteln 21 versehen ist, durch die eine lösbare form- und/oder kraftschlüssige Verbindung zwischen dem Leuchtmittel 10 und einer hierzu korrespondierenden Fassung, beispielsweise einer Lampenfassung für eine Glühbirne, herstellbar ist.

Die Befestigungsmittel 21 sind bei der in Fig. 1 dargestellten Ausführungsform eines erfindungsgemäßen Leuchtmittels in Form von am Sockel im wesentlichen gegenüberliegend angeordneten stiftartigen Elementen ausgeführt, durch welche eine Verbindung des erfindungsgemäßen Leuchtmittels 10 mit einer hierzu korrespondierenden Fassung nach Art eines Bajonettverschlußes möglich ist.

Das gezeigte erfindungsgemäße Leuchtmittel weist weiterhin Kontaktmittel 30 auf, welche im mit der Fassung verbundenen Zustand des Leuchtmittels Kontaktelemente der Fassung kontaktieren. Wie Fig. 1 entnehmbar ist wird als zweites Kontaktmittel der Sockel selbst, welcher vorzugsweise aus einem Metall gefertigt ist, verwendet.

Weiterhin sind Konvertierungsmittel 40 vorgesehen, welche eine Eingangsseite (Primärseite) und eine Ausgangsseite (Sekundärseite) haben, wobei die Eingangsseite der Konvertierungsmittel 40 mit den Kontaktmitteln 30 bzw. dem ebenfalls als Kontakt dienenden Sockel 20 elektrisch leitend verbunden ist. Auf diese Weise liegt die am Leuchtmittel bzw. der Fassung anliegende elektrische Energie der ersten Spannung U₁ an der Primärseite der Konvertierungsmittel an.

Besonders bevorzugt sind die Konvertierungsmittel auf einer Leiterplatte üblicher Bauart in Form von SMD-Bauteilen gebildet, wobei die Leiterplatte vorzugsweise im wesentlichen vollständig im Sockel 20 des erfindungsgemäßen Leuchtmittels 10 untergebracht ist.

Durch die Konvertierungsmittel 40 wird die primärseitig an den Konvertierungsmitteln anliegende elektrische Energie der ersten Spannung U₁ in eine sekundärseitig an den Konvertierungsmitteln 40 anliegende elektrische Energie der zweiten Spannung U₂ konvertiert. Besonders bevorzugt weisen die Konvertierungsmittel 40 hierzu Konstantspannungsregler bzw. Konstantstromquellen 41 auf, durch welche die sekundärseitig an der Konvertierungseinrichtung 40 anliegende elektrische Energie der zweiten Spannung U₂ auf einem konstanten Spannungsniveau gehalten wird bzw. der sekundärseitig von den Konvertierungsmitteln 40 abgegebene Strom begrenzt wird.

Die Konvertierungsmittel 40 sind sekundärseitig über elektrische Leiter mit einer die lichtemittierenden Elemente 50 tragenden Leiterplatte 55 verbunden, wobei die lichtemittierenden Elemente 50 bei dem erfindungsgemäßen Leuchtmittel gemäß Fig. 1 in Form von lichtemittierenden Dioden (LED) üblicher Bauart ausgeführt sind. Die Leiterplatte 55 ist im wesentlichen eben ausgeführt, so daß die lichtemittierenden Elemente 50 auch im wesentlichen in einer Ebene, vorzugsweise im wesentlichen senkrecht zur Achse des Sockels 20 angeordnet sind.

Gemäß Fig. 1 weist das erfindungsgemäße Leuchtmittel ein Gehäuse 60 auf, welches besonders bevorzugt aus einem im wesentlichen transparenten Vollmaterial besteht und innerhalb dessen die lichtemittierenden Elemente 50 sowie vorzugsweise auch die Leiterplatte 55 und die Konvertierungsmittel 40 vergossen sind. Das Gehäuse 60 des erfindungsgemäßen Leuchtmittels 10 gemäß Fig. 1 ist somit im wesentlichen frei von Lufteinschlüssen und daher besonders unempfindlich gegen äußere mechanische Einflüsse wie z. B. Druck oder Unterdruck.

Gemäß Fig. 1 ist die Csehäuseaußenform dabei der Form einer üblicherweise verwendeten elektrischen Glühbirne, wie sie beispielsweise in Kraftfahrzeugen, Flugzeugen und dergleichen zum Einsatz kommt entsprechend nachgebildet.

Die Gehäuseoberfläche 61 weist einen das vom Leuchtmittel abgestrahlte Licht beeinflussenden Bereich auf, welcher beispielsweise mit einer Riffelung oder Aufrauhung versehen ist, so daß hierdurch die räumliche und/oder spektrale Abstrahlcharakteristik des Leuchtmittels bereichs- bzw. sektorenweise beeinflußt wird.

Die Konvertierungseinrichtung 40 des in Fig. 1 gezeigten erfindungsgemäßen Leuchtmittels 10 weist weiterhin eine Steuerungseinrichtung 45 auf, durch die eine selektive Ansteuerung der lichtemittierenden Elemente 50 erfolgt. Im gezeigten Fall wird beispielsweise während des normalen Betriebes lediglich die erste, dritte und fünfte Leuchtdiode des in Fig. 1 gezeigten erfindungsgemäßen Leuchtmittels angesteuert, so daß durch das zweite und vierte lichtemittierende Element während des Normalbetriebs des erfindungsgemäßen Leuchtmittels keine Lichtemission erfolgt. Durch die Überwachungsmittel 42 wird dabei die korrekte Funktion der ersten, dritten und fünften Leuchtdiode geprüft bzw. kontinuierlich überwacht und, für den Fall daß eines dieser lichtemittierenden Elemente nicht ordnungsgemäß funktioniert bzw. ausfällt ein Fehlersignal an die Steuerungseinrichtung 45 ausgegeben, durch welches diese veranlaßt wird beispielsweise das zweite und/oder vierte lichtemittierende Element zuzuschalten, um weiterhin eine korrekte Funktion des erfindungsgemäßen Leuchtmittels zu gewährleisten.

Für den Fall, daß ein zweites lichtemittierendes Element aus der Gruppe des ersten, dritten und fünften lichtemittierenden Elementes ausfällt wird dies durch die Überwachungsmittel 42 ebenfalls registriert und in Folge dessen ein zweites Fehlersignal an die Steuerungseinrichtung 45 ausgegeben, welche hiernach eine periodische Modulation der Helligkeit des zweiten und vierten lichtemittierenden Elements veranlaßt (Blinken), wodurch ein Betrachter auf den stark fehlerhaften Zustand des erfindungsgemäßen Leuchtmittels aufmerksam gemacht wird und infolge dessen das erfindungsgemäße Leuchtmittel ersetzt werden kann.

Das erfindungsgemäße Leuchtmittel 10 weist weiterhin Kodierungsmittel 70 auf, welche an der Außenseite des Sockels 20 angeordnet sind und mit Kodierungselementen der Fassung, mit welcher das erfindungsgemäße Leuchtmittel verbunden wird dergestalt zusammenwirken, daß die Funktionsweise der Steuerungseinrichtung 45 des Leuchtmittels hierdurch bestimmt wird. Beispielsweise erfolgt beim Einsetzen des gezeigten Leuchtmittels in eine erste Fassung durch die Kodierungsmittel 70 eine Einstellung der Steuerungseinrichtung, durch welche im Normalbetrieb die Ansteuerung von lediglich drei lichtemittierenden Elementen erfolgt, wohingegen beim Einsetzen des erfindungsgemäßen Leuchtmittels in eine zweite Fassung eine Einstellung der Steuerungseinrichtung 45 durch die Kodierungsmittel 70 in der Art erfolgt, daß im Normalbetrieb alle fünf lichtemittierenden Elemente angesteuert werden, also insgesamt eine höhere Lichtintensität vom erfindungsgemäßen Leuchtmittel abgestrahlt wird.

Ebenso wie zur Einstellung der Funktionsweise der Steuerungseinrichtung 45 besteht selbstverständlich auch die Möglichkeit, die Kodierungsmittel 70 für eine Einstellung der Betriebsart der Überwachungseinrichtung bzw. der Steuerungseinrichtung im Fehlerfall zu verwenden. Dies kann beispielsweise dazu führen, daß das erfindungsgemäße Leuchtmittel in einer ersten Fassung derart kodiert wird, daß im Falle einer Fehlfunktion eines einzigen lichtemittierenden Elementes bereits ein Alarmzustand signalisiert wird, so daß das erfindungsgemäße Leuchtmittel ausgetauscht werden kann. Beim Einsatz in einer zweiten Fassung kann das erfindungsgemäße Leuchtmittel hingegen derart kodiert werden, daß eine erhöhte Toleranz gegenüber Fehlfunktionen einzelner lichtemittierender Elemente erlaubt ist und ein Alarmzustand erst bei Ausfall nahezu aller lichtemittierenden Elemente signalisiert wird.

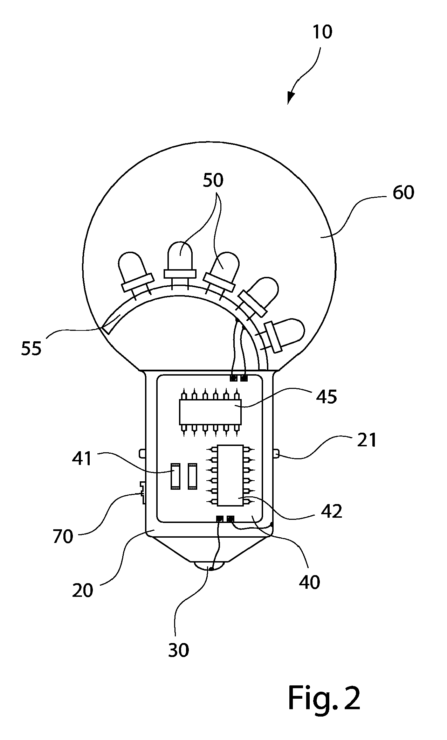

Fig. 2 zeigt eine zu Fig. 1 im wesentlichen ähnliche Ausführungsform des erfindungsgemäßen Leuchtmittels, wobei die Anordnung der lichtemittierenden Elemente 50 hier nicht auf einer ebenen Leiterplatte 55 erfolgt sondern die Leiterplatte 55 gckrümmt ausgeführt ist woraus eine veränderte räumliche Abstrahlcharakteristik des von den lichtemittierenden Elementen abgestrahlten Lichtes resultiert. Auf diese Weise besteht ebenfalls die Möglichkeit, die räumliche Abstrahlcharakteristik des erfindungsgemäßen Leuchtmittels zu beeinflussen.

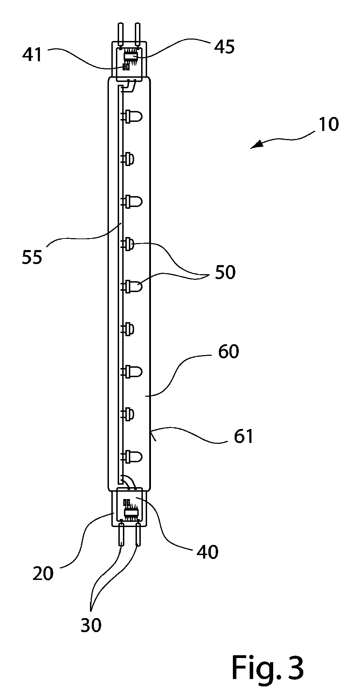

Fig. 3 zeigt eine weitere Ausführungsform eines erfindungsgemäßen Leuchtmittels, wobei hier eine Verwendung des Leuchtmittels in Fassungen vorgesehen ist, welche üblicherweise für Glüh-, Neon- oder Gasentladungsröhren eingesetzt werden. Das in Fig. 3 gezeigte erfindungsgemäße Leuchtmittel weist beidseitig einen Sockel 20 auf, welcher mit Kontaktmitteln 30 versehen ist, die mit Konvertierungsmitteln 40 primärseitig elektrisch leitend verbunden sind. Die Konvertierungsmittel 40 weisen Konstantspannungsregler bzw. Konstantstromquellen 41 sowie Steuerungseinrichtungen 45 auf. Die lichtemittierenden Elemente 50 sind auf einer im wesentlichen achsenförmig ausgeführten elektrischen Leiterplatte 55 angeordnet und in einem Gehäuse 60, welches vorzugsweise aus einem transparenten Vollmaterial besteht, vergossen. Die Gehäuseoberfläche 61 ist bei dem Leuchtmittel 10 gemäß Fig. 3 vorzugsweise aufgerauht ausgeführt, wodurch eine Streuung des von den lichtemittierenden Elementen abgestrahlten Lichtes erfolgt und somit eine besonders homogene Abstrahlcharakteristik des Leuchtmittels 10 resultiert.

Fig. 3 zeigt insbesondere die Möglichkeit der Verwendung unterschiedlicher lichtemittierender Elemente, welche beispielsweise unterschiedliche spektrale Charakteristika aufweisen können, um durch eine geeignete Steuerung, beispielsweise unter Verwendung geeigneter Kodierungsmittel, Mischfarben mit vorgegebenen spektralen Eigenschaften erzeugen können, welche durch die stark streuende Oberfläche 61 des Gehäuses 60 für den Betrachter im wesentlichen als ein einziger Farbton mit einer vorgegebenen Farbtemperatur erscheinen.

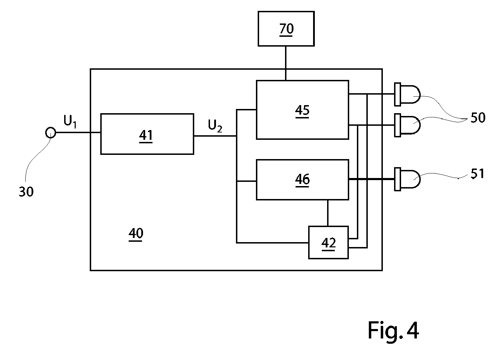

Fig. 4 zeigt ein Blockschaltbild eines erfindungsgemäßen Leuchtmittels, wobei an Kontaktmitteln 30 die elektrische Energie der ersten Spannung U₁ anliegt, welche über einen elektrischen Leiter mit einer Konstantspannungsquelle 41 verbunden sind. Am Ausgang der Konstantspannungsquelle 41 liegt die elektrische Energie der zweiten Spannung U₂ an und wird über elektrisch leitende Verbindungen an die erste und zweite Steuerungseinrichtung 45, 46 sowie die Überwachungseinrichtung 42 übertragen. Die erste Steuerungseinrichtung 45 ist mit zwei lichtemittierenden Elementen 50 verbunden und steuert diese im Normalbetrieb des erfindungsgemäßen Leuchtmittels derart an, daß eine im wesentlichen konstante Lichtemission durch die lichemittierenden Elemente 50 erfolgt. Die erste Steuerungseinrichtung 45 ist weiterhin mit Kodierungsmitteln 70 verbunden, welche ein Vorwählen der Betriebsart der ersten Steuerungseinrichtung 45 ermöglichen, so daß diese beispielsweise auch in einen Betriebszustand geschaltet werden kann, in welchem im Normalbetrieb nur eines der beiden lichtemittierenden Elemente 50 angesteuert wird.

Die Überwachungsmittel 42 überwachen dabei den normalen Betrieb der lichtemittierenden Elemente 50, beispielsweise durch eine Messung des durch diese fließenden Stromes oder aber durch die kontinuierliche Messung der an den lichtemittierenden Elementen 50 abfallenden Spannungen. Im Falle einer Veränderung des Stromflusses durch die lichtemittierenden Elemente 50 oder des Spannungsabfalls geben die Überwachungsmittel 42 ein Fehlersignal an die zweite Steuerungseinrichtung 46 aus, wodurch diese veranlaßt wird ein drittes lichtemittierendes Element 51, welches zu Reservezwecken vorgesehen ist, anzusteuern und in Betrieb zu nehmen.

Hierdurch kann eine Fehlfunktion eines oder auch beider lichtemittierender Elemente 50 detektiert und zumindest teilweise kompensiert werden. Besonders bevorzugt moduliert die zweite Steuerungseinrichtung 46 die Lichtemission der Reserve-LED periodisch, so daß für den Betrachter der fehlerhafte Zustand des erfindungsgemäßen Leuchtmittels signalisiert wird.

## Patentansprüche

1. Leuchtmittel (10), aufweisend:
- wenigstens einen Sockel (20), welcher Befestigungsmittel (21) aufweist, durch die eine lösbare form- und/oder kraftschlüssige Verbindung zwischen dem Leuchtmittel (10) und wenigstens einer hierzu korrespondierenden Fassung herstellbar ist;
- Kontaktmittel (30), welche in dem mit der Fassung verbundenen Zustand Kontaktelemente der Fassung kontaktieren und hierdurch elektrische Energie der ersten Spannung am Leuchtmittel (10) anliegt;
- Konvertierungsmittel (40), welche die elektrische Energie der ersten Spannung in elektrische Energie zweiter Spannung konvertieren,
**dadurch gekennzeichnet, daß**
wenigstens ein lichtemittierendes Element (50) vorgesehen ist, durch welches elektrische Energie der zweiten Spannung mittels eines Halbleitermaterials zumindest teilweise in Lichtenergie umgewandelt wird.

2. Leuchtmittel gemäß Anspruch 1,
**dadurch gekennzeichnet, daß**
ein zumindest bereichsweise transparentes Gehäuse (60) vorgesehen ist, welches sich vom Sockel (20) aus erstreckt und das lichtemittierende Element (50) bzw. die lichtemittierenden Elemente im wesentlichen vollständig umgibt, wobei die Gehäuseform vorzugsweise zumindest teilweise kugelförmig, ellipsoid-, quader- bzw. Polyederförmig oder dergleichen ist und/oder eine zur Längsachse des Sockels im wesentlichen zylindersymmetrische Form aufweist.

3. Leuchtmittel gemäß Anspruch 2,
**dadurch gekennzeichnet, daß**
die Gehäuseoberfläche (61) zumindest bereichsweise mit einer das transmittierte Licht beeinflussenden Oberflächenstruktur und/oder -eigenschaft versehen ist.

4. Leuchtmittel gemäß Anspruch 2 oder 3,
**dadurch gekennzeichnet, daß**
das Gehäuse (60) aus einem zumindest bereichsweise transparenten Vollmaterial gebildet ist, welches vorzugsweise mit dem bzw. den lichtemittierenden Elementen (50) in stoffschlüssiger Verbindung steht, wobei das Vollmaterial vorzugsweise im wesentlichen frei von Lufteinschlüssen ist.

5. Leuchtmittel gemäß Anspruch 4,
**dadurch gekennzeichnet, daß**
das Gehäuse (60) durch Kunstharz gebildet ist, in welchem das lichtemittierende Element (50) bzw. die lichtemittierenden Elemente und/oder die Konvertierungsmittel (40) vergossen sind.

6. Leuchtmittel gemäß einem der vorhergehenden Ansprüche,
**dadurch gekennzeichnet, daß**
die Konvertierungsmittel (40) zumindest teilweise innerhalb des Sockels (20) angeordnet sind.

7. Leuchtmittel gemäß einem der vorhergehenden Ansprüche,
**dadurch gekennzeichnet, daß**
die Konvertierungsmittel (40) wenigstens eine Konstantstrom- und/oder -spannungsquelle (41) aufweisen, welche den Stromfluß durch das lichtemittierende Element (50) oder die lichtemittierenden Elemente bzw. die hieran anliegende Spannung begrenzt.

8. Letichtmittel gemäß einem der vorhergehenden Ansprüche,
**dadurch gekennzeichnet, daß**
wenigstens eine Steuerungseinrichtung (45) vorgesehen ist, welche eine selektive Ansteuerung einzelner lichtemittierender Elemente (50) bzw. Gruppen von lichtemittierenden Elementen erlaubt, so daß hierdurch die vom Leuchtmittel (10) abgestrahlte Lichtintensität zeitlich und/oder zumindest bereichs- bzw. sektorenweise beeinflußbar ist.

9. Leuchtmittel gemäß Anspruch 8,
**dadurch gekennzeichnet, daß**
Codierungsmittel (70) vorgesehen sind, welche vorzugsweise am oder im Sockel (20) angeordnet sind und durch welche die Funktionsweise der Steuerungseinrichtung (45) hinsichtlich der selektiven Ansteuerung einzelner lichtemittierender Elemente (50) bzw. Gruppen von lichtemittierenden Elementen einstellbar ist.

10. Leuchtmittel gemäß Anspruch 9,
**dadurch gekennzeichnet, daß**
die Codierungsmittel (70) mit Codierungselementen der Fassung zusammenwirken und hierdurch die Einstellung erfolgt.

11. Leuchtmittel gemäß einem der vorhergehenden Ansprüche,
**dadurch gekennzeichnet, daß**
Überwachungsmittel (28) vorgesehen sind, welche den Betriebszustand und vorzugsweise die fehlerfreie Funktion wenigstens eines lichtemittierenden Elements (50) aufzeichnen und im Falle einer Fehlfunktion ein Fehlersignal ausgeben.

12. Leuchtmittel gemäß Anspruch 11,
**dadurch gekennzeichnet, daß**
die Steuerungseinrichtung (45) das Fehlersignal auswertet und in Folge dessen die abgestrahlte Lichtintensität zumindest eines lichtemittierenden Elements (50) durch die Steuerungseinrichtung (45) zumindest teilweise periodisch variiert wird.

13. Leuchtmittel gemäß einem der vorhergehenden Ansprüche,
**dadurch gekennzeichnet, daß**
die lichtemittierenden Elemente (50) im wesentlichen in einer Ebene bzw. auf einer Achse oder dergleichen angeordnet sind.

14. Letichtmittel gemäß einem der vorhergehenden Ansprüche,
**dadurch gekennzeichnet, daß**
die lichtemittierenden Elemente (50) im wesentlichen auf einer Kugel- bzw. Ellipsoidoberfläche und/oder auf einer Polygonoberfläche oder dergleichen angeordnet sind.

15. Leuchtmittel gemäß einem der vorhergehenden Ansprüche,
**dadurch gekennzeichnet, daß**
die lichtemittierenden Elemente (50) aus einer Gruppe ausgewählt sind, die lichtemittierende Dioden (LED), insbesondere microdisk LEDs, organische LEDs (OLETDs), lichtemittierende Polymere (polyLEDs), Halbleiter-Laser und dergleichen enthält.
